# EUROPEAN PATENT APPLICATION

(11) **EP 4 415 086 A1**
(43) Date of publication of application: **14.08.2024**
(21) Application number: 24150969.4
(22) Date of filing: 09.01.2024
(51) Int. Cl.: H01M 8/04537, H01M 8/04664, H01M 8/04858, H01M 8/249, H01M 8/043, H01M 8/04992

(54) **FUEL CELL SYSTEM**

(30) Priority: 03.02.2023 JP 2023014964
(71) Applicant: TOYOTA JIDOSHA KABUSHIKI KAISHA, Toyota-shi, Aichi-ken, 471-8571 (JP)
(72) Inventor: IIO, Atsuo, Toyota-shi, 471-8571 (JP)
(74) Representative: J A Kemp LLP

(57) **Abstract**

A fuel cell system including a plurality of fuel cell stacks includes a control unit configured to, when a part of the fuel cell stacks is replaced, set a first output of a replaced fuel cell stack to differ from a second output of another unreplaced fuel cell stack.

## Description

### BACKGROUND OF THE INVENTION

### 1. Field of the Invention

The present disclosure relates to a fuel cell system.

### 2. Description of Related Art

Various technologies have been proposed for fuel cells (FCs). Japanese Unexamined Patent Application Publication No. 2016-174519 (JP 2016-174519 A) discloses a fuel cell system including a plurality of power generation systems. Japanese Unexamined Patent Application Publication No. 2022-154919 (JP 2022-154919 A) discloses a fuel cell system that determines a combination of a plurality of fuel cell stacks based on the degrees of deterioration.

### SUMMARY OF THE INVENTION

In the related art, there is no mention about replacement of components, and the states of the fuel cells after the replacement cannot be grasped.

The present disclosure provides a fuel cell system in which a fuel cell stack that has just been replaced can be made ready for power generation.

The present disclosure provides a fuel cell system including a plurality of fuel cell stacks.

The fuel cell system includes a control unit.

The control unit is configured to, when a part of the fuel cell stacks is replaced, set a first output of a replaced fuel cell stack to differ from a second output of another unreplaced fuel cell stack.

In the fuel cell system according to the above aspect, the first output may be an output serving as a predetermined refresh operating point at which performance of the replaced fuel cell stack is increased.

In the fuel cell system according to the above aspect, the first output may be an output serving as an optimum operating point of the replaced fuel cell stack.

In the fuel cell system according to the above aspect, the control unit may be configured to record output characteristics of fuel cell stacks that is not replacement targets before replacement of the part of the fuel cell stacks.

The control unit may be configured to, during or after replacement of a fuel cell stack that is a replacement target, set outputs of the fuel cell stacks that are not the replacement targets by unevenly distributing a load that is based on an output requested by the fuel cell system to cause a third output of a fuel cell stack that is not relatively deteriorated among the fuel cell stacks that are not the replacement targets to be higher than a fourth output of a fuel cell stack that is relatively deteriorated.

In the fuel cell system according to the above aspect, the control unit may be configured to, when a power generation request is made from the fuel cell system before replacement of the part of the fuel cell stacks, determine whether the replacement of the part of the fuel cell stacks is necessary.

The control unit may be configured to, when the control unit determines that the replacement of the part of the fuel cell stacks is necessary, record output characteristics of fuel cell stacks that is not replacement targets before the replacement of the part of the fuel cell stacks.

In the fuel cell system according to the above aspect, the control unit may be configured to, when a power generation request is made from the fuel cell system after replacement of the part of the fuel cell stacks, determine whether outputs of fuel cell stacks that is not replacement targets are settable by unevenly distributing a load that is based on an output requested by the fuel cell system.

The control unit may be configured to, when the control unit determines that the load is distributable unevenly, set the outputs of the fuel cell stacks that are not the replacement targets by unevenly distributing the load to cause a third output of a fuel cell stack that is not relatively deteriorated to be higher than a fourth output of a fuel cell stack that is relatively deteriorated, among the fuel cell stacks that are not the replacement targets.

The control unit may be configured to, when the control unit determines that the load is not distributable unevenly, set the outputs of the fuel cell stacks that are not the replacement targets by evenly distributing the load.

In the fuel cell system according to the above aspect, the control unit may be configured to, when the part of the fuel cell stacks is replaced, set the first output of the replaced fuel cell stack to be higher than the second output of the other unreplaced fuel cell stack with priority.

With the fuel cell system of the present disclosure, the fuel cell stack that has just been replaced can be made ready for power generation.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a flowchart showing an example of control performed by a fuel cell system of the present disclosure before replacement of a part of fuel cell stacks;
FIG. 2 is a flowchart showing an example of control performed by the fuel cell system of the present disclosure during the replacement of a part of the fuel cell stacks; and
FIG. 3 is a flowchart showing an example of control performed by the fuel cell system of the present disclosure after the replacement of a part of the fuel cell stacks.

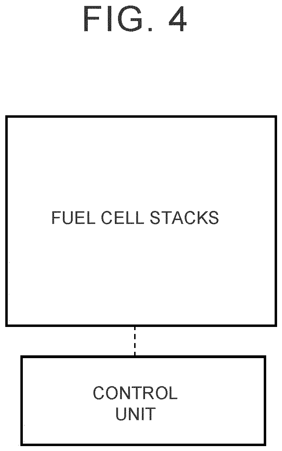

FIG. 4 illustrates a configuration of the fuel cell system of the present disclosure.

### DETAILED DESCRIPTION OF EMBODIMENTS

An embodiment according to the present disclosure will be described below. Matters other than those particularly mentioned herein that are necessary for the practice of the present disclosure (e.g., the general configuration and manufacturing process of a fuel cell system that does not characterize the present disclosure) may be grasped as design matters for those skilled in the art based on the related art in the field. The present disclosure can be carried out based on the content disclosed herein and the common general technical knowledge in the field.

The word "to" indicating a numerical range herein means to include numerical values before and after the word "to" as a lower limit value and an upper limit value.

Any combination of upper and lower limit values in the numerical range can be adopted.

The present disclosure provides a fuel cell system including a plurality of fuel cell stacks.

The fuel cell system includes a control unit.

The control unit is configured to, when a part of the fuel cell stacks is replaced, set a first output of a replaced fuel cell stack to differ from a second output of the other unreplaced fuel cell stacks.

In stationary power generation systems and the like, it is assumed that the remaining fuel cell stacks continue to generate electric power rather than stopping the entire system (remaining fuel cell stacks) even during replacement of a part of the fuel cell stacks to meet a power generation request by the remaining fuel cell stacks. In this case, higher loads than usual are imposed on the remaining fuel cell stacks. If a load corresponding to a decrease in the number of fuel cell stacks during the replacement of a part of the fuel cell stacks is simply allocated equally to the remaining fuel cell stacks, a high-temperature hysteresis and a high-load hysteresis are exhibited depending on the fuel cell stacks, leading to an abrupt state change and a decrease in IV performance. In the related art, when the remaining fuel cell stacks other than the replacement target continue to operate during the replacement of a part of the fuel cell stacks, the progress of deterioration of the fuel cell stacks other than the replacement target is not taken into consideration. Therefore, there is a possibility that the optimum states of the fuel cell stacks other than the replacement target cannot be maintained.

As a characteristic of the fuel cell stack, the IV performance tends to increase by giving a power generation hysteresis in the early stage, and the original performance can be obtained. For this purpose, it may be necessary to add a hysteresis of a predetermined load or more. If the load distribution is continued from the viewpoint of efficiency, a desired load is not applied to the replaced fuel cell stack. Therefore, the performance of the replaced fuel cell stack cannot immediately be exerted after the replacement. It is likely that the desired load is not applied particularly in a system such as a stationary power generation system mainly involving fixed-quantity power generation. Therefore, there is a possibility that the maximum performance of the fuel cell stack cannot immediately be exerted after the replacement in the related art.

On the premise that the fuel cell system of the present disclosure includes a plurality of fuel cell stacks, the fuel cell system performs load distribution in consideration of the characteristics of the fuel cell stacks when replacing a part of the fuel cell stacks. When replacing a part of the fuel cell stacks, load distribution is intentionally performed before the replacement of the fuel cell stack to grasp the characteristics of the (remaining) fuel cell stacks that are not to be replaced, and a load distribution ratio of the remaining fuel cell stacks during the replacement of the fuel cell stack is determined. After the replacement of the fuel cell stack, the newly mounted fuel cell stack is subjected to load distribution with priority to promote a refresh operation of the newly mounted fuel cell stack. Thus, it is possible to optimize the load distribution for the remaining fuel cell stacks in the power generation during the replacement of a part of the fuel cell stacks, and to maximize the performance of the newly mounted fuel cell stack in an early stage after the replacement.

According to the present disclosure, the fuel cell stack that has just been replaced can be made ready for power generation.

According to the present disclosure, it is possible to initially grasp the output characteristics of the fuel cell stack that has just been replaced after the replacement.

In the present disclosure, efficient power generation can be achieved in the entire fuel cell system including the plurality of fuel cell stacks during and after the replacement of the fuel cell stack.

The fuel cell system of the present disclosure includes the plurality of fuel cell stacks and the control unit.

The fuel cell system of the present disclosure may include an oxidant gas system, a fuel gas system, and a cooling system.

The fuel cell system of the present disclosure continues power generation even during replacement of a part of the fuel cell stacks.

The fuel cell system of the present disclosure may include three or more fuel cell stacks. The upper limit is not particularly set, and may be 200 or less, or 20 or less.

The fuel cell system of the present disclosure may be used by being mounted on a moving body such as a vehicle. The fuel cell system of the present disclosure may be used by being mounted on a stationary power generation system such as a generator that supplies electric power to the outside.

The vehicle may be a fuel cell electric vehicle or the like. Examples of the moving body other than the vehicle include a railroad vehicle, a ship, and an aircraft.

The fuel cell system of the present disclosure may be used by being mounted on a moving body such as a vehicle that can travel also with electric power of a secondary battery.

The mobile body and the stationary power generation system may include the fuel cell system of the present disclosure. The moving body may include a drive unit such as a motor, an inverter, and a hybrid control system.

The hybrid control system may be a system that can cause the moving body to travel with both the output of fuel cells and the electric power of the secondary battery.

The fuel cell stack (sometimes referred to as "FC stack", "stack", etc.) is a stack of a plurality of single cells. In the present disclosure, both the single cells and the fuel cell stack may be referred to as "fuel cell".

The number of stacked single cells is not limited in particular, and may be, for example, two to several hundred.

The single cell of the fuel cell generally includes a membrane electrode gas diffusion layer assembly.

The membrane electrode gas diffusion layer assembly includes an anode-side gas diffusion layer, an anode catalyst layer, an electrolyte membrane, a cathode catalyst layer, and a cathode-side gas diffusion layer in this order.

A cathode (oxidant electrode) includes the cathode catalyst layer and the cathode-side gas diffusion layer.

An anode (fuel electrode) includes the anode catalyst layer and the anode-side gas diffusion layer.

The cathode catalyst layer and the anode catalyst layer will be collectively referred to as "catalyst layers".

For example, the catalyst layer may include a catalyst metal that promotes electrochemical reaction, an electrolyte having proton conductivity, a support having electron conductivity, and so forth.

Examples of the catalyst metal include platinum (Pt) and alloys made of Pt and another metal (e.g., a Pt alloy including cobalt, nickel, or the like).

The electrolyte may be a fluororesin or the like. The fluororesin may be, for example, a Nafion solution.

The catalyst metal is supported on the support. Each catalyst layer may include the support supporting the catalyst metal (catalyst-supporting support) and the electrolyte.

Examples of the support that supports the catalyst metal include carbon materials such as commercially available carbon.

The cathode-side gas diffusion layer and the anode-side gas diffusion layer will be collectively referred to as "gas diffusion layers".

The gas diffusion layer may be an electroconductive member having gas permeability, or the like.

Examples of the electroconductive member include a carbon porous body such as carbon cloth or carbon paper, and a metal porous body such as a metal mesh or a foamed metal.

The electrolyte membrane may be a solid polymer electrolyte membrane. Examples of the solid polymer electrolyte membrane include fluorine-based electrolyte membranes such as a thin perfluorosulfonic acid membrane containing moisture and hydrocarbon-based electrolyte membranes. The electrolyte membrane may be, for example, a Nafion membrane (made by DuPont).

The single cell may include two separators that sandwich both sides of the membrane electrode gas diffusion layer assembly as necessary. One of the two separators is an anode-side separator and the other is a cathode-side separator. In the present disclosure, the anode-side separator and the cathode-side separator will be collectively referred to as "separators".

The separators may have holes constituting a manifold, such as a supply hole and a discharge hole for fluids such as a reactant gas and a cooling medium to flow in the stacking direction of the single cells.

As the cooling medium, a coolant such as a mixed solution of ethylene glycol and water can be used to suppress freezing at low temperatures. Further, cooling air can be used as the cooling medium.

Examples of the supply hole include a fuel gas supply hole, an oxidant gas supply hole, and a cooling medium supply hole.

Examples of the discharge hole include a fuel gas discharge hole, an oxidant gas discharge hole, and a cooling medium discharge hole.

The separators may have a reactant gas channel on a face in contact with the gas diffusion layers. The separators may also have a cooling medium channel for maintaining a constant temperature of the fuel cell on a face opposite to the face in contact with the gas diffusion layers.

The separators may be gas-impermeable electroconductive members or the like. Examples of the electroconductive members include dense carbon obtained by compressing carbon to obtain gas impermeability, and a stamped metal (e.g., iron, aluminum, or stainless steel) plate. The separator may have a current collecting function.

The fuel cell stack may have manifolds such as an inlet manifold with which each supply hole is in communication and an outlet manifold with which each discharge hole is in communication.

Examples of the inlet manifold include an anode inlet manifold, a cathode inlet manifold, and a cooling medium inlet manifold.

Examples of the outlet manifold include an anode outlet manifold, a cathode outlet manifold, and a cooling medium outlet manifold.

In the present disclosure, the fuel gas and the oxidant gas will be collectively referred to as "reactant gasses". The reactant gas supplied to the anode is the fuel gas (may be referred to as "anode gas"), and the reactant gas supplied to the cathode is the oxidant gas (may be referred to as "cathode gas"). The fuel gas is a gas containing primarily hydrogen, and may be hydrogen. The oxidant gas is a gas containing oxygen, and may be oxygen, air, dry air, or the like.

The fuel cell system may include an oxidant gas system.

The oxidant gas system supplies the oxidant gas to the fuel cell.

The oxidant gas system may include an oxidant gas supply unit, an oxidant gas supply pipe, an oxidant off-gas discharge pipe, a bypass pipe, and the like.

The oxidant gas supply unit may be an air compressor or the like. The air compressor is electrically connected to the control unit, and the rotation speed of a rotor of the air compressor is controlled based on a control signal from the control unit. The air compressor may be disposed in the oxidant gas supply pipe.

The oxidant gas supply pipe connects the outside of the fuel cell system and the cathode inlet of the fuel cell. The oxidant gas supply pipe enables the supply of the oxidant gas from the oxidant gas supply unit to the cathode of the fuel cell. The cathode inlet may be the oxidant gas supply hole, the cathode inlet manifold, or the like. An oxidant gas inlet sealing valve may be disposed downstream of the oxidant gas supply unit in the oxidant gas supply pipe.

The oxidant gas inlet sealing valve is electrically connected to the control unit and is opened by the control unit to supply the oxidant gas to the cathode of the fuel cell. The flow rate of the oxidant gas supplied to the cathode may be adjusted by adjusting the opening degree of the oxidant gas inlet sealing valve.

The oxidant off-gas discharge pipe connects the cathode outlet of the fuel cell and the outside of the fuel cell system. The oxidant off-gas discharge pipe enables discharge of an oxidant off-gas to the outside of the fuel cell system. The oxidant off-gas is the oxidant gas discharged from the cathode of the fuel cell. The cathode outlet may be the oxidant gas discharge hole, the cathode outlet manifold, or the like. A pressure regulating valve may be disposed in the oxidant off-gas discharge pipe.

The pressure regulating valve is electrically connected to the control unit and is opened by the control unit to discharge the oxidant off-gas that is the reacted oxidant gas from the oxidant off-gas discharge pipe to the outside of the fuel cell system. The pressure (cathode pressure) of the oxidant gas supplied to the cathode may be adjusted by adjusting the opening degree of the pressure regulating valve. The oxidant off-gas may have the same components as the oxidant gas, may be oxygen, air, dry air, or the like, and may contain water vapor or the like.

The bypass pipe connects the oxidant gas supply pipe and the oxidant off-gas discharge pipe, and bypasses the fuel cell. The bypass pipe branches from the oxidant gas supply pipe at a branch portion downstream of the oxidant gas supply unit in the oxidant gas supply pipe, bypasses the fuel cell, and joins the oxidant off-gas discharge pipe at a joining portion downstream of the pressure regulating valve in the oxidant off-gas discharge pipe.

A bypass valve may be disposed in the bypass pipe. The bypass valve may be a valve whose opening degree is adjustable, or may be a three-way valve for oxidant gas. In the case of the three-way valve for oxidant gas, it may be disposed at the most upstream branch portion of the bypass pipe, and also serves as the oxidant gas inlet sealing valve.

The bypass valve is electrically connected to the control unit and is opened by the control unit to supply at least a part of the oxidant gas to the oxidant off-gas discharge pipe by bypassing the fuel cell. In the case where the bypass valve is the three-way valve for oxidant gas, the control unit closes a valve of the bypass valve downstream of the oxidant gas supply pipe so that the oxidant gas flows from the oxidant gas supply pipe to the bypass pipe when it is not necessary to supply the oxidant gas to the fuel cell. When the valve on the bypass pipe side is opened, the entire amount of the oxidant gas can be supplied to the oxidant off-gas discharge pipe.

The oxidant gas system may include a cooler (intercooler) downstream of the oxidant gas supply unit in the oxidant gas supply pipe. The cooler may be disposed downstream of the oxidant gas supply unit in the oxidant gas supply pipe and upstream of a branch portion with the bypass pipe.

The cooler may exhibit a cooling function by circulating the cooling medium in the cooling system inside and outside the cooler.

The oxidant gas system may include a humidifier downstream of the oxidant gas supply unit in the oxidant gas supply pipe. The humidifier may be disposed downstream of the oxidant gas supply unit in the oxidant gas supply pipe and downstream of a branch point with the bypass pipe.

The humidifier may be disposed across the oxidant gas supply pipe and the oxidant off-gas discharge pipe.

The fuel cell system may include a fuel gas system.

The fuel gas system supplies the fuel gas to the fuel cell.

The fuel gas system may include a fuel gas supply unit, a fuel gas supply pipe, a fuel off-gas discharge pipe, a circulation pipe, an ejector, and the like.

Examples of the fuel gas supply unit include a fuel tank. Specific examples of the fuel gas supply unit include a liquid hydrogen tank and a compressed hydrogen tank.

The fuel gas supply pipe connects the fuel gas supply unit and the anode inlet of the fuel cell. The fuel gas supply pipe enables the supply of the fuel gas containing hydrogen to the anode of the fuel cell. The anode inlet may be the fuel gas supply hole, the anode inlet manifold, or the like.

The fuel off-gas discharge pipe connects the anode outlet of the fuel cell and the outside of the fuel cell system. The anode outlet may be the fuel gas discharge hole, the anode outlet manifold, or the like.

The fuel off-gas may contain the fuel gas that has passed through the anode without reaction, water that has reached the anode from the water produced at the cathode, and the like. The fuel off-gas may contain corrosive substances produced in the catalyst layer, the electrolyte membrane, and the like, the oxidant gas that may be supplied to the anode during scavenging, and the like.

The circulation pipe branches from the fuel off-gas discharge pipe at a branch portion of the fuel off-gas discharge pipe, joins the fuel gas supply pipe at a joining portion of the fuel gas supply pipe, and circulates the fuel off-gas as a circulation gas in the fuel gas system.

A circulation pump that circulates the circulation gas in the fuel gas system may be disposed in the circulation pipe.

The ejector may be disposed at the joining portion of the fuel gas supply pipe.

A fuel gas inlet sealing valve may be disposed upstream of the ejector in the fuel gas supply pipe.

The fuel gas inlet sealing valve is electrically connected to the control unit and is opened by the control unit to supply the fuel gas to the anode of the fuel cell. The flow rate of the fuel gas supplied to the anode may be adjusted by adjusting the opening degree of the fuel gas inlet sealing valve. The fuel gas inlet sealing valve may be a linear solenoid valve or the like. An anode gas-liquid separator and an exhaust/drain valve may be disposed at the branch portion of the fuel off-gas discharge pipe. The exhaust/drain valve is electrically connected to the control unit and its opening and closing are controlled by the control unit.

The fuel gas inlet sealing valve, a regulator, an injector, the ejector, and the like may be disposed in this order downstream of the fuel gas supply unit in the fuel gas supply pipe.

The fuel cell system may include a cooling system.

The cooling system adjusts the temperature of the fuel cell.

The cooling system may include a cooling medium pipe.

The cooling medium pipe enables circulation of the cooling medium inside and outside the fuel cell. The cooling medium pipe communicates with the cooling medium supply hole and the cooling medium discharge hole provided in the fuel cell and enables the circulation of the cooling medium inside and outside the fuel cell.

The cooling medium pipe may be provided with a cooling medium supply unit. The cooling medium supply unit is electrically connected to the control unit. The cooling medium supply unit is driven based on a control signal from the control unit. The control unit controls the flow rate of the cooling medium supplied from the cooling medium supply unit to the fuel cell. With this control, the temperature of the fuel cell is controlled. Examples of the cooling medium supply unit include a coolant pump.

The cooling medium pipe may be provided with a radiator that radiates heat of the cooling medium.

The cooling medium pipe may be provided with a reserve tank that stores the cooling medium.

The fuel cell system may include a battery.

The battery (secondary battery) may be any rechargeable battery. Examples of the battery include known secondary batteries such as a nickel-metal hydride secondary battery and a lithium ion secondary battery. The secondary battery may include a power storage element such as an electric double layer capacitor. A plurality of secondary batteries may be connected in series. The secondary battery supplies electric power to the air compressor or the like. The secondary battery may be chargeable by a power supply outside the vehicle, such as a household power supply. The secondary battery may be charged with electric power output from the fuel cell. The charging and discharging of the secondary battery may be controlled by the control unit.

For example, the control unit physically includes an arithmetic processing unit such as a central processing unit (CPU), a storage device such as a read-only memory (ROM) that stores control programs and control data to be processed by the CPU and a random access memory (RAM) to be mainly used as various work areas for control processes, and an input/output interface. The control unit may be a control device such as a power control unit (PCU) or an electronic control unit (ECU).

The control unit may be electrically connected to an ignition switch that may be mounted on the vehicle. The control unit may be operable by an external power supply even if the ignition switch is OFF.

When a part of the fuel cell stacks is replaced, the control unit sets the first output of the replaced fuel cell stack to differ from the second output of the other unreplaced fuel cell stacks. The part herein means "at least one" or may mean "one".

The control unit may set the first output of the replaced fuel cell stack to be lower or higher than the second output of the other unreplaced fuel cell stacks with priority. For example, when sequentially replacing two fuel cell stacks, the power generation performance of the fuel cell stack after the first replacement may be different from that of the fuel cell stack after the second replacement. When the power generation performance of the fuel cell stack after the second replacement is lower than that of the fuel cell stack after the first replacement, the output of the fuel cell stack after the second replacement may be set lower than the output of the other fuel cell stacks including the fuel cell stack after the first replacement with priority.

The first output may be an output serving as a predetermined refresh operating point at which the performance of the replaced fuel cell stack is increased.

The first output may be an output serving as an optimum operating point of the replaced fuel cell stack.

The operating point is the product of an operating voltage and an operating current on the I-V curve. The optimum operating point (maximum output operating point) is a point on the I-V curve where the product of the operating voltage and the operating current is largest.

The operating point for a refresh operation (refresh operating point) may be predefined based on the characteristics of the fuel cell stack because the required pattern varies depending on the characteristics of the fuel cell stack. The refresh operation may be an operation that changes the voltage, such as reduction of the voltage of the fuel cell stack by reduction of the amount of oxidant gas supply to reduce the current of the fuel cell stack. Thus, the film on the surface of the catalyst can be removed, and the power generation performance of the fuel cell stack can be increased. In the operation at the optimum operating point, water produced by power generation sweeps away scraps of materials that make up the MEGA during manufacture, thereby increasing the power generation performance of the fuel cell stack.

It is possible to bring the replaced fuel cell stack into an optimum state in an early stage in consideration of the overall state of the fuel cell system.

### Recording of States of Fuel Cell Stacks

In the present disclosure, the control unit may record output characteristics (states) of a plurality of fuel cell stacks that is not replacement targets before the replacement of a part of the fuel cell stacks. The control unit may record the output characteristics of the fuel cell stacks that are not the replacement targets during or after the replacement of a part of the fuel cell stacks.

The control unit may intentionally adjust the load distribution and store the states of the fuel cell stacks before the replacement of a part of the fuel cell stacks in order to grasp the states (IV characteristics etc.) of the fuel cell stacks that are not the replacement targets. A lower limit power generation amount and an upper limit power generation amount may be defined for each fuel cell stack.

The states (output characteristics) of the fuel cell stacks can be grasped with accuracy by using at least one piece of information selected from among IV characteristics of the fuel cell stacks, coolant temperatures of the fuel cell stacks, outside air temperature, water contents of the fuel cell stacks, impedances of the fuel cell stacks, inclination angles of the fuel cell stacks, and mounting positions of the fuel cell stacks (edge, center, etc. of the moving body), and can be grasped with higher accuracy by using at least one piece of information selected from among the IV characteristics of the fuel cell stacks, the coolant temperatures of the fuel cell stacks, the outside air temperature, the water contents of the fuel cell stacks, and the impedances of the fuel cell stacks.

By grasping the states of the fuel cell stacks, it is possible to obtain information for determining whether the entire fuel cell system is in a state in which the refresh operation of the replaced fuel cell stack can be permitted.

The fuel cell system may include temperature sensors for measuring temperatures such as the coolant temperatures of the fuel cell stacks and the outside air temperature, current sensors and voltage sensors for measuring the IV characteristics of the fuel cell stacks, resistance sensors for measuring the water contents of the fuel cell stacks, the impedances of the fuel cell stacks, and the like, angle sensors for measuring the inclination angles of the fuel cell stacks, and position information sensors for measuring the mounting positions of the fuel cell stacks.

The sensors are electrically connected to the control unit. The control unit detects pieces of information measured by the sensors.

### Determination as to Whether Replacement of Fuel Cell Stack Is Necessary

In the present disclosure, when a power generation request is made from the fuel cell system before the replacement of a part of the fuel cell stacks, the control unit may determine whether the replacement of a part of the fuel cell stacks is necessary.

When the control unit determines that the replacement of a part of the fuel cell stacks is necessary, the control unit may, before the replacement of a part of the fuel cell stacks, intentionally change the load on the fuel cell stacks that are not the replacement targets, issue power generation commands to the fuel cell stacks that are not the replacement targets, and record the output characteristics (states) of the fuel cell stacks that are not the replacement targets.

### Uneven Load Distribution

During or after the replacement of a part of the fuel cell stacks, the control unit may distribute the load on the fuel cell stacks that are not the replacement targets based on information on the states of the fuel cell stacks that are not the replacement targets. The control unit may issue power generation commands adjusted in advance so as not to make an excessive power generation request for a certain fuel cell stack.

During or after the replacement of a fuel cell stack that is a replacement target, the control unit may set the outputs of the fuel cell stacks that are not the replacement targets by unevenly distributing a load that is based on an output requested by the fuel cell system to cause a third output of a fuel cell stack that is not relatively deteriorated among the fuel cell stacks that are not the replacement targets to be higher than a fourth output of a fuel cell stack that is relatively deteriorated.

### Determination as to Whether Uneven Load Distribution of Fuel Cell Stacks Is Possible

In the present disclosure, when a power generation request is made from the fuel cell system during or after the replacement of a part of the fuel cell stacks, the control unit may determine whether the outputs of the fuel cell stacks that are not the replacement targets can be set by unevenly distributing a load that is based on an output requested by the fuel cell system.

During or after the replacement of a part of the fuel cell stacks, the control unit may store the states of the fuel cell stacks that are not the replacement targets and determine whether the load can be distributed (to a low load side).

When the control unit determines that the load can be distributed unevenly, the control unit may set the outputs of the fuel cell stacks that are not the replacement targets by unevenly distributing the load to cause the third output of the fuel cell stack that is not relatively deteriorated among the fuel cell stacks that are not the replacement targets to be higher than the fourth output of the fuel cell stack that is relatively deteriorated.

When the control unit determines that the load cannot be distributed unevenly, the control unit may set the outputs of the fuel cell stacks that are not the replacement targets by evenly distributing the load.

When the load can be distributed, the control unit may determine the load with priority to achieve the refresh operating point or the optimum operating point of the replaced fuel cell stack, and determine the load distribution to the remaining fuel cell stacks that are not the replacement targets.

By the determination as to whether the load can be distributed unevenly, the operation is not performed to only prioritize the replaced fuel cell stack, and the timing to distribute the load unevenly can be determined in consideration of the entire fuel cell system.

Determination may be made that the load cannot be distributed unevenly when the water contents of the unreplaced fuel cell stacks that are not the replacement targets are large and load distribution occurs in the lower limit power generation amount or less necessary for avoiding water clogging.

Determination may be made that the load cannot be distributed unevenly when the coolant temperatures of the unreplaced fuel cell stacks that are not the replacement targets are low and load distribution occurs in the lower limit power generation amount or less necessary for maintaining appropriate temperatures.

### Method for Calculating Load Distribution of Fuel Cell Stacks

In order to grasp the state of the fuel cell stack, the load of each fuel cell stack may be changed intentionally. Particularly in a system that continues fixed-quantity power generation, there is a possibility that correct information cannot be obtained unless the load is changed intentionally. For an operating point for grasping the state, a preset load (fixed point), a current sweep, or other means that can ensure accuracy can be used.

Based on state information stored before the replacement of a part of the fuel cell stacks, the control unit distributes the load to the remaining fuel cell stacks that are not the replacement targets. Basically, the number of fuel cell stacks that can generate electric power decreases during the replacement of a part of the fuel cell stacks. Therefore, the requested load on the fuel cell stacks that are not the replacement targets increases. Since the load can be distributed to the fuel cell stacks that are not the replacement targets based on the prestored information, stable output can be ensured in the entire system even during the replacement. Thus, downtime due to the replacement of the fuel cell stack can be eliminated, and the deterioration of the fuel cell stacks that are not the replacement targets can be suppressed during the replacement.

Further, the following requests can be avoided: a request with poor power generation efficiency, such as an excessive request for a fuel cell stack containing a large amount of water in an unstable power generation state, an air request for air blow, a request with a high-temperature hysteresis, an excessive request for a stack that has already reached a high temperature, a request that causes excessive cooling, such as an insufficient request that leads to a water temperature of refreezing or poor power generation efficiency, a request that causes great potential fluctuation (deterioration), such as a great load fluctuation request for a stack at a high temperature, and a request that causes water clogging, such as a request for an excessively low air flow rate below the lower limit air flow rate.

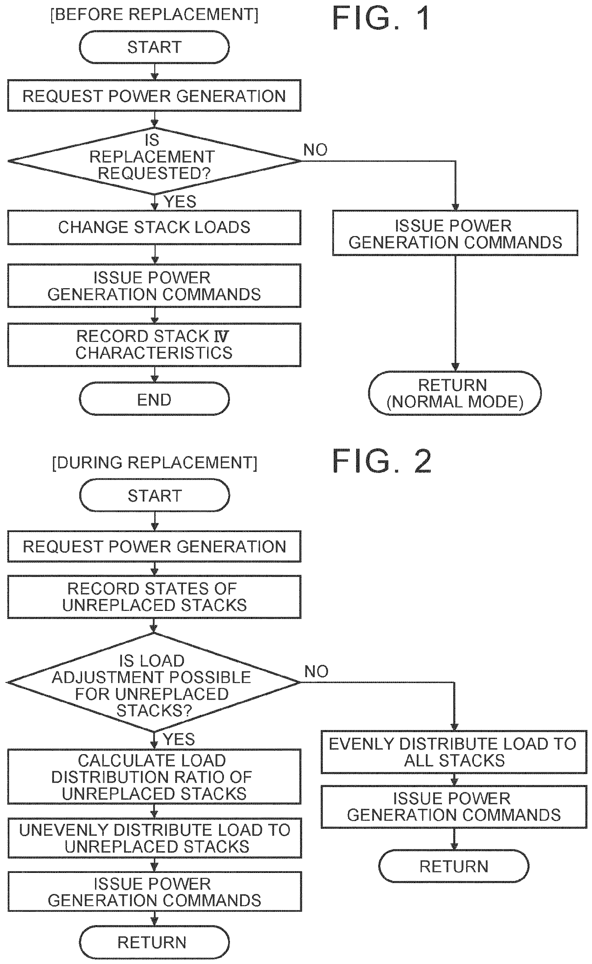

FIG. 1 is a flowchart showing an example of control performed by the fuel cell system of the present disclosure before the replacement of a part of the fuel cell stacks. First, a power generation request is made from the fuel cell system.

The control unit determines whether a part of the fuel cell stacks needs to be replaced.

When determination is made that the replacement is unnecessary, the control unit issues power generation commands for a normal operation to all the fuel cell stacks, and terminates the control. After the control is terminated, the control may be repeated from the beginning. When determination is made that the replacement is necessary, the control unit intentionally varies loads on the fuel cell stacks that are not replacement targets.

Then, the control unit issues power generation commands to the fuel cell stacks.

Then, the control unit records output characteristics (IV characteristics) of the fuel cell stacks that are not the replacement targets, and terminates the control. After the control is terminated, the control may be repeated from the beginning.

By recording the output characteristics (states) of the fuel cell stacks that are not the replacement targets before the replacement, reference is made to the record when the power generation request made from the fuel cell system in at least one of the time during the replacement and the time after the replacement. Thus, it is possible to smoothly determine whether the load can be distributed unevenly and to calculate the load distribution ratio.

FIG. 2 is a flowchart showing an example of control performed by the fuel cell system of the present disclosure during the replacement of a part of the fuel cell stacks. First, a power generation request is made from the fuel cell system during the replacement of a part of the fuel cell stacks.

The control unit records output characteristics (states) of the fuel cell stacks that are not the replacement targets.

Based on the recorded output characteristic information of the fuel cell stacks, the control unit determines whether the outputs of the fuel cell stacks that are not the replacement targets can be set by unevenly distributing a load that is based on an output requested by the fuel cell system.

When determination is made that the uneven distribution is possible, the control unit calculates a load distribution ratio of the fuel cell stacks that are not the replacement targets. The control unit sets the outputs of the fuel cell stacks that are not the replacement targets by unevenly distributing the load that is based on the output requested by the fuel cell system. The control unit issues power generation commands to the fuel cell stacks for the outputs set by unevenly distributing the load, and terminates the control. After the control is terminated, the control may be repeated from the beginning.

When determination is made that the uneven distribution is not possible, the control unit sets the outputs of the fuel cell stacks that are not the replacement targets by evenly distributing the load that is based on the output requested by the fuel cell system. The control unit issues power generation commands to the fuel cell stacks for the outputs set by evenly distributing the load, and terminates the control. After the control is terminated, the control may be repeated from the beginning.

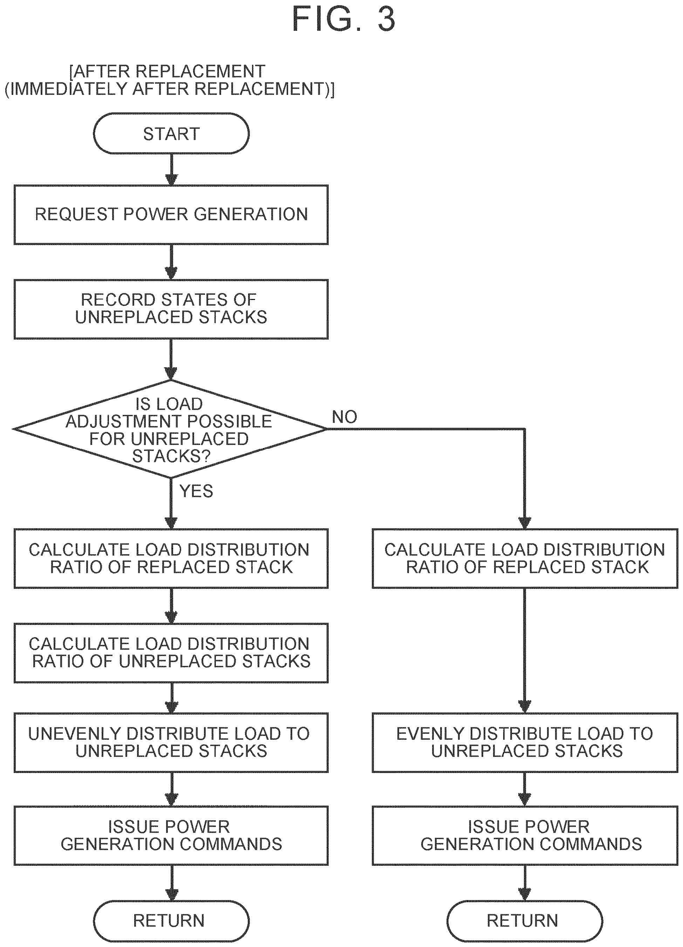

FIG. 3 is a flowchart showing an example of control performed by the fuel cell system of the present disclosure after the replacement of a part of the fuel cell stacks.

First, a power generation request is made from the fuel cell system after the replacement of a part of the fuel cell stacks.

The control unit records output characteristics (states) of the unreplaced fuel cell stacks that are not the replacement targets.

Based on the recorded output characteristic information of the unreplaced fuel cell stacks that are not the replacement targets, the control unit determines whether the outputs of the unreplaced fuel cell stacks that are not the replacement targets can be set by unevenly distributing a load that is based on an output requested by the fuel cell system.

When determination is made that the uneven distribution is possible, the control unit performs control as follows. The control unit calculates a first load distribution ratio between the replaced fuel cell stack and the unreplaced fuel cell stacks, and sets a first output of the replaced fuel cell stack to differ from a second output of the other unreplaced fuel cell stacks (unreplaced fuel cell stacks that are not the replacement targets). The control unit calculates a second load distribution ratio of the unreplaced fuel cell stacks that are not the replacement targets. The control unit sets the outputs of the unreplaced fuel cell stacks that are not the replacement targets by unevenly distributing the load to cause a third output of the fuel cell stack that is not relatively deteriorated among the unreplaced fuel cell stacks that are not the replacement targets to be higher than a fourth output of the fuel cell stack that is relatively deteriorated. The control unit issues power generation commands for the outputs set for the fuel cell stacks, that is, the first output for the replaced stack and the outputs set for the unreplaced stacks by unevenly distributing the load, and terminates the control. After the control is terminated, the control may be repeated from the beginning.

When determination is made that the uneven distribution is not possible, the control unit performs control as follows. The control unit calculates the first load distribution ratio between the replaced fuel cell stack and the unreplaced fuel cell stacks, and sets the first output of the replaced fuel cell stack to differ from the second output of the other unreplaced fuel cell stacks (unreplaced fuel cell stacks that are not the replacement targets). The control unit sets the outputs of the unreplaced fuel cell stacks that are not the replacement targets by evenly distributing the load on the unreplaced fuel cell stacks that are not the replacement targets. The control unit issues power generation commands for the outputs set for the fuel cell stacks, that is, the first output for the replaced stack and the outputs set for the unreplaced stacks by evenly distributing the load, and terminates the control. After the control is terminated, the control may be repeated from the beginning.

## Claims

1. A fuel cell system including a plurality of fuel cell stacks, the fuel cell system comprising a control unit, wherein
the control unit is configured to, when a part of the fuel cell stacks is replaced, set a first output of a replaced fuel cell stack to differ from a second output of another unreplaced fuel cell stack.

2. The fuel cell system according to claim 1, wherein the first output is an output serving as a predetermined refresh operating point at which performance of the replaced fuel cell stack is increased.

3. The fuel cell system according to claim 1, wherein the first output is an output serving as an optimum operating point of the replaced fuel cell stack.

4. The fuel cell system according to claim 1, wherein:
the control unit is configured to record output characteristics of fuel cell stacks that is not replacement targets before replacement of the part of the fuel cell stacks; and
the control unit is configured to, during or after replacement of a fuel cell stack that is a replacement target, set outputs of the fuel cell stacks that are not the replacement targets by unevenly distributing a load that is based on an output requested by the fuel cell system to cause a third output of a fuel cell stack that is not relatively deteriorated to be higher than a fourth output of a fuel cell stack that is relatively deteriorated, among the fuel cell stacks that are not the replacement targets.

5. The fuel cell system according to claim 1, wherein:
the control unit is configured to, when a power generation request is made from the fuel cell system before replacement of the part of the fuel cell stacks, determine whether the replacement of the part of the fuel cell stacks is necessary; and
the control unit is configured to, when the control unit determines that the replacement of the part of the fuel cell stacks is necessary, record output characteristics of fuel cell stacks that is not replacement targets before the replacement of the part of the fuel cell stacks.

6. The fuel cell system according to claim 1, wherein:
the control unit is configured to, when a power generation request is made from the fuel cell system after replacement of the part of the fuel cell stacks, determine whether outputs of fuel cell stacks that is not replacement targets are settable by unevenly distributing a load that is based on an output requested by the fuel cell system;
the control unit is configured to, when the control unit determines that the load is distributable unevenly, set the outputs of the fuel cell stacks that are not the replacement targets by unevenly distributing the load to cause a third output of a fuel cell stack that is not relatively deteriorated to be higher than a fourth output of a fuel cell stack that is relatively deteriorated, among the fuel cell stacks that are not the replacement targets; and
the control unit is configured to, when the control unit determines that the load is not distributable unevenly, set the outputs of the fuel cell stacks that are not the replacement targets by evenly distributing the load.

7. The fuel cell system according to claim 1, wherein the control unit is configured to, when the part of the fuel cell stacks is replaced, set the first output of the replaced fuel cell stack to be higher than the second output of the other unreplaced fuel cell stacks with priority.
